Europäisches Patentamt

European Patent Office

Office européen des brevets

(19)

(11) Numéro de publication: **0 186 929**
**A1**

(12)

# DEMANDE DE BREVET EUROPEEN

(21) Numéro de dépôt: **85202126.0**

(22) Date de dépôt: **20.12.85**

(51) Int. Cl.⁴: **A 47 J 37/07**

(30) Priorité: **04.01.85 BE 214298**

(43) Date de publication de la demande: **09.07.86**
**Bulletin 86/28**

(84) Etats contractants désignés: **AT CH DE FR GB IT LI LU NL SE**

(71) Demandeur: **"SAEY", Industrielaan 4, B-8710 Kortrijk-Heule (BE)**

(72) Inventeur: **Saey, Jean, Melweg 20, B-8500 Kortrijk (BE)**

(74) Mandataire: **Callewaert, Jean et al, Bureau Gevers S.A. rue de Livourne, 7 - Bte 1, B-1050 Bruxelles (BE)**

(54) **Barbecue.**

(57) Le barbecue comprend un dispositif d'allumage (1) et au-dessus de ce dernier de préférence un feu ouvert ou espace de cuisson (2) où un feu de charbon de bois (3) peut être allumé au moyen de ce dispositif d'allumage (1), qui présente une chambre (4) pouvant être presque complètement fermée, qui peut se raccorder au-dessus à l'espace de cuisson (2) et dans laquelle un feu fermé peut être allumé au moyen de papier et matière analogue, cette chambre (4) présentant au moins une ouverture de tirage (5) pour l'arrivée d'oxygène vers le feu précité, et entre l'espace de cuisson (2) et la chambre (4) est prévu au moins un passage (6) pour la mise en communication de l'espace de cuisson (2) avec le feu allumé dans la chambre (4) précitée.

## Barbecue.

L'invention est relative à un barbecue avec un dispositif d'allumage et un feu ouvert ou espace de cuisson prévu au-dessus de celui-ci, où un feu de charbon de bois peut être allumé au moyen de ce dispositif d'allumage.

L'invention a principalement pour but d'offrir un tel barbecue avec un dispositif d'allumage très simple mais efficace, qui permet d'utiliser un combustible très économique et même gratuit, tel que du papier ou analogue, et qui est en mesure de mettre à feu le charbon de bois, en un minimum de temps et d'une manière presque automatique.

A cette fin, le dispositif d'allumage présente une chambre pouvant être fermée de préférence presque complètement, qui se raccorde à la partie supérieure à l'espace de cuisson et dans laquelle peut être fait un feu fermé, au moyen de papier et matière analogue, cette chambre présentant au moins une ouverture de tirage pour l'arrivée d'oxygène vers le feu précité, et entre l'espace de cuisson et la chambre est prévu au moins un passage pour permettre de mettre l'espace de cuisson en communication avec le feu allumé dans la chambre précitée.

Dans une forme de réalisation particulière de l'invention, le feu est en communication au moyen d'un canal de guidage dirigé vers le haut, avec l'espace de cuisson, par l'intermédiaire d'un passage situé de préférence de manière centrale par rapport à cet espace, de telle sorte qu'un tirage naturel se produit à travers le feu vers ledit passage.

Dans une forme de réalisation préférée de l'invention, la chambre du dispositif d'allumage est formée conjointement avec ledit canal de guidage, par une colonne creuse sur laquelle repose le fond de l'espace de cuisson.

D'autres détails et particularités de l'invention ressortiront de la description ci-après, donnée à titre d'exemple non limitatif et en se référant aux dessins annexés, dans lesquels:

La figure 1 est une vue en élévation frontale, avec coupe partielle, d'un barbecue suivant une première forme de réalisation de l'invention.

La figure 2 est une vue en coupe suivant la ligne II-II de la figure 1.

La figure 3 est une vue frontale en perspective d'un barbecue suivant une seconde forme de réalisation de l'invention.

Dans ces figures, des références identiques désignent des éléments identiques ou analogues.

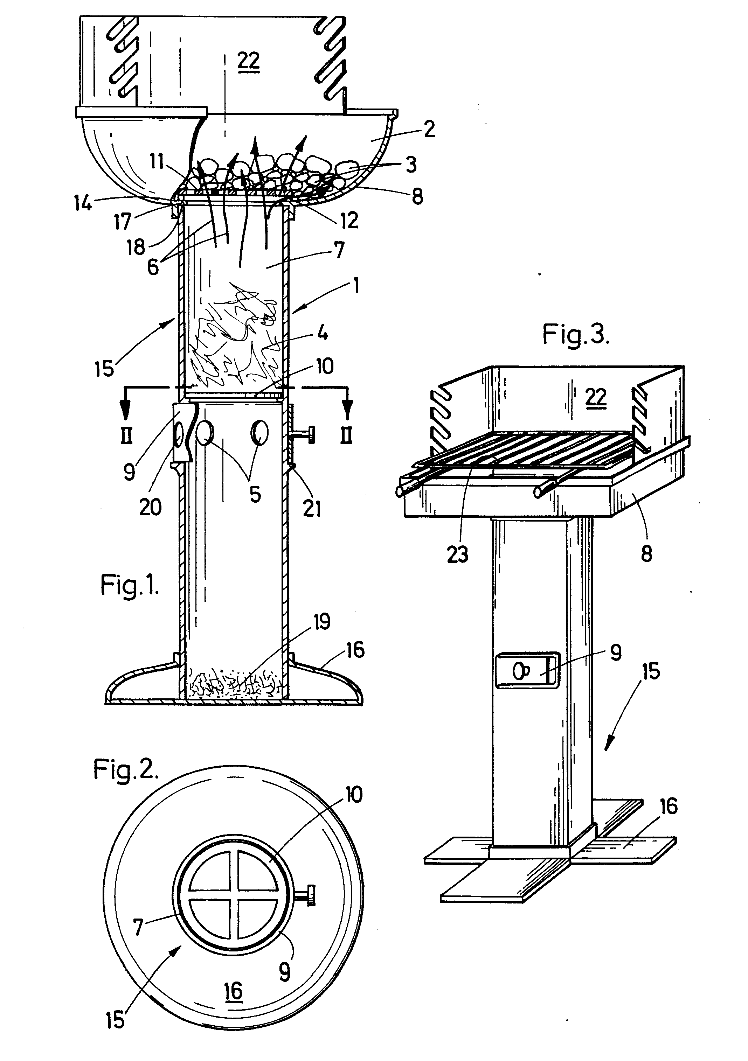

On a représenté à la figure 1 un barbecue avec un dispositif d'allumage 1 et un feu ouvert ou espace de cuisson 2 prévu au-dessus de celui-ci, où un feu de charbon de bois 3 peut être allumé à l'aide de ce dispositif d'allumage 1.

Ce dispositif d'allumage présente une chambre de combustion 4 pouvant être presque complètement fermée, qui se raccorde à la partie supérieure à l'espace de cuisson 2 et dans laquelle un feu fermé peut être allumé à l'aide de papier et matière analogue.

Cette chambre présente une série d'ouvertures de tirage 5 pour l'amenée d'oxygène vers ce feu fermé.

En outre, entre l'espace de cuisson 2 et la chambre 4 est prévu au moins un passage 6 pour permettre la mise en communication de l'espace de cuisson 2 avec le feu allumé dans la chambre 4.

Le feu dans la chambre 4 se trouve en liaison au moyen d'un canal de guidage dirigé vers le haut 7, avec l'espace de cuisson 2, par l'intermédiaire du passage 6, qui se situe de manière centrale par rapport au fond 8 de l'espace de cuisson 2.

Ainsi, ce canal forme une sorte de courte cheminée à travers laquelle il se produit un tirage naturel à travers le feu vers ce passage, de telle manière que les flammes du papier ou matière analogue flambant sont aspirées dans ce passage.

Les ouvertures de tirage 5 qui sont pratiquées dans la paroi latérale de la chambre de combustion 4, sont réglables et obturables au moyen d'un régulateur de tirage 9 et débouchent dans la chambre 4, en dessous d'une grille 10, sur laquelle les papier et matière analogue peuvent être allumés, par exemple par l'intermédiaire de l'une des ouvertures de tirage 5.

Une grille 11 est également prévue dans l'espace de cuisson 2, au-dessus du passage 6, grille sur laquelle peut être placé le charbon de bois 3.

Sous le bord de la grille 11 se trouve une fente 12 qui permet aux flammes et gaz de fumée provenant du feu dans la chambre 4, d'être déviés partiellement le long de la face supérieure du fond 8 dans l'espace de cuisson 2, comme indiqué par les flèches 13.

De cette façon, le charbon de bois 3 dans l'espace de cuisson peut être allumé presque simultanément sur toute la superficie du fond 8 dans l'espace de cuisson 2.

Eventuellement, on peut prévoir en dessous de la grille 11, un dispositif de soufflage non représenté, pour attiser le feu de charbon de bois 3.

Dans la forme de réalisation particulière illustrée à la figure 1, la grille 11 repose sur une série de saillies 14 qui sont réparties uniformément sur le fond 8 de l'espace de cuisson 2, de telle sorte qu'entre ce fond et le bord de la grille 11, une fente annulaire 12 est formée.

Une autre possibilité consiste à prévoir sur la grille, à la face inférieure, de tels supports par lesquels cette dernière peut alors reposer sur le fond.

Encore une autre possibilité consiste par exemple à doter le bord de la grille de dents, de telle manière qu'elle ne repose qu'en un minimum d'endroits sur le fond 8.

Dans une forme de réalisation préférée de l'invention et comme représenté en fait aux figures, la chambre 4 forme avec le canal de guidage prévu au-dessus d'elle, une colonne continue 15 sur laquelle repose le fond 8 de l'espace de cuisson 2.

Cette colonne est fermée à la partie inférieure et dotée d'un pied 16, tandis que le fond de l'espace de cuisson repose de manière amovible sur son extrémité supérieure qui est ouverte et par laquelle le papier ou matière analogue peut être placé dans la chambre 4.

Dans ce but, ce fond est par exemple doté en dessous d'un anneau 17 qui enserre de manière ajustée le bord supérieur de la colonne 15, ou inversément l'anneau conique pénètre dans la colonne et s'y coince.

En dessous de la grille 10 est prévu un bac collecteur 19 pour les cendres, qui peut être vidé par exemple en basculant la colonne.

La hauteur de la colonne 15 peut pratiquement correspondre à la hauteur normale d'une table de travail, par exemple entre 70 et 90 cm.

Dans la forme de réalisation suivant la figure 1, la colonne 15 présente une section transversale circulaire, tandis que le fond 8 a pratiquement la forme d'une calotte sphérique, comme c'est le cas pour de nombreux barbecues classiques.

Dans cette forme de réalisation, le régulateur de tirage 9 est formé par un anneau dans lequel sont pratiquées des ouverture 20 correspondant aux ouvertures de tirage 5, qui peuvent être situées complètement ou partiellement en face des ouvertures 5. Cet anneau se trouve à l'extérieur de la colonne 15 et repose sur des appuis 21.

Finalement, sur le fond 8 se trouve encore un brise-vent amovible dirigé vers le haut 22, connu en soi, qui s'étend sur approximativement 180° sur le bord de ce fond.

Une fois que le feu de charbon de bois est allumé, les ouvertures de tirage 5 peuvent être fermées au moyen du régulateur de tirage 9, afin d'éviter tout tirage à travers la grille 11.

Si l'on veut toutefois attiser le feu de charbon de bois, les ouvertures de tirage peuvent naturellement encore être ouvertes.

La forme de réalisation représentée à la figure 3 se distingue principalement de celle suivant la figure 1 par le fait que la colonne 15 présente une section transversale carrée et que le régulateur de tirage 9 est formé par un petit registre prévu dans la paroi de la colonne, comme par exemple sur certains poêles classiques, plus précisément des poêles à bois.

En outre, l'espace de cuisson 2 présente la forme d'un bac rectangulaire.

Il est évident que l'on peut utiliser dans l'espace de cuisson proprement dit, tous les accessoires habituels, tels qu'une grille 23 sur laquelle par exemple de la viande ou produit analogue à cuire peut être déposé.

Il doit être entendu que la présente invention n'est en aucune façon limitée aux formes de réalisation ci-avant et que bien des modifications peuvent y être apportées sans sortir du cadre de la présente demande de brevet.

Ainsi, par exemple, la grille 10 peut être remplacée par un fond 8 partiellement perforé.

## REVENDICATIONS

1. Barbecue avec un dispositif d'allumage et un feu ouvert ou espace de cuisson prévu au-dessus de celui-ci, où un feu de charbon de bois peut être allumé au moyen de ce dispositif d'allumage, caractérisé en ce que le dispositif d'allumage (1) présente une chambre (4) pouvant être fermée de préférence presque complètement, qui se raccorde à la partie supérieure à l'espace de cuisson (2) et dans laquelle peut être fait un feu fermé, au moyen de papier et matière analogue, cette chambre (4) présentant au moins une ouverture de tirage (5) pour l'arrivée d'oxygène vers le feu précité, et entre l'espace de cuisson (2) et la chambre (4) est prévu au moins un passage (6) pour permettre la mise en communication de l'espace de cuisson (2) avec le feu allumé dans la chambre (4) précitée.

2. Barbecue suivant la revendication 1, caractérisé en ce que le feu dans la chambre (4) est en liaison au moyen d'un canal de guidage dirigé vers le haut (7), avec l'espace de cuisson (2), par l'intermédiaire d'un passage (6) situé de préférence de manière centrale par rapport à cet espace (2), de telle sorte qu'un tirage naturel se produit à travers le feu vers ledit passage (6).

3. Barbecue suivant l'une ou l'autre des revendications 1 et 2, caractérisé en ce que l'ouverture de tirage (5) est réglable et obturable au moyen d'un régulateur de tirage (9) prévu sur la chambre précitée (4).

4. Barbecue suivant l'une quelconque des revendications précédentes, caractérisé en ce que l'ouverture de tirage (5) débouche dans la chambre (4), en dessous d'une grille (10) sur laquelle le papier et matière analogue peut être placé.

5. Barbecue suivant l'une quelconque des revendications précédentes, caractérisé en ce que dans l'espace de cuisson (2), au-dessus du passage (6) précité, est prévue une grille (11) sur laquelle le charbon de bois (3) peut être déposé.

6. Barbecue suivant la revendication 5, caractéri-

sé en ce qu'en dessous de la grille (11) est prévue une fente (12), qui permet aux flammes et gaz de fumée provenant du dispositif d'allumage (1), d'être déviés partiellement le long du fond (8) dans l'espace de cuisson (2).

7. Barbecue suivant la revendication 6, caractérisé en ce que la grille (11) repose sur des saillies (14) qui sont prévues sur le fond (8) de l'espace de cuisson (2), de telle sorte qu'entre ce fond (8) et le bord de la grille (11) est formée une fente annulaire (12).

8. Barbecue suivant l'une quelconque des revendications 2 à 7, caractérisé en ce que la chambre (4) du dispositif d'allumage (1), dans laquelle le feu précité est allumé, est formée conjointement avec ledit canal de guidage (7) par une colonne creuse (15), sur laquelle repose le fond (8) de l'espace de cuisson (2).

9. Barbecue suivant l'une quelconque des revendications précédentes, caractérisé en ce que le fond (8) de l'espace de cuisson (2) repose de manière amovible sur ledit dispositif d'allumage (1).

10. Barbecue suivant l'une quelconque des revendications 4 à 9, caractérisé en ce qu'en dessous de la grille (10) sur laquelle le papier et matière analogue peut être allumé, un bac collecteur (19) est prévu pour les cendres.

11. Barbecue suivant l'une quelconque des revendications précédentes, caractérisé en ce que la hauteur du dispositif d'allumage (1) correspond approximativement à la hauteur normale d'une table de travail.

0 186 929

Fig.1.

Fig.2.

Fig.3.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| | | | A 47 J 37/07 |
| X | US-A-3 841 299 (TOMITA) <br><br> * En entier * <br><br> --- | 1-3,5, 8,9 | |
| X | US-A-3 209 743 (STEWART et al.) <br> * En entier * <br><br> --- | 1-5 | |
| X | US-A-3 915 145 (TOMITA) <br><br> * En entier * <br><br> --- | 1-3,5, 8,9 | |
| A | US-A-3 472 151 (COX) <br><br> * En entier * <br><br> --- | 1-5,8, 9 | |
| A | US-A-3 217 634 (FOX) <br> * Colonne 3, lignes 17-33; figure 1 * <br><br> --- | 6,7 | DOMAINES TECHNIQUES RECHERCHES (Int. Cl.4) <br><br> A 47 J |
| A | US-A-3 330 266 (STEPHEN) <br><br> --- | | |
| A | DE-U-7 917 979 (SCHROEDER) <br><br> ----- | | |

Le présent rapport de recherche a été établi pour toutes les revendications

| Lieu de la recherche LA HAYE | Date d'achèvement de la recherche 09-04-1986 | Examinateur SCHARTZ J. |
|---|---|---|